# EUROPÄISCHE PATENTSCHRIFT

(11) **EP 1 227 717 B1**
(45) Veröffentlichungstag und Bekanntmachung des Hinweises auf die Patenterteilung: **23.04.2003**
(21) Anmeldenummer: 00985005.8
(22) Anmeldetag: 10.11.2000
(51) Int. Cl.: A01K 1/00, E04H 5/08

(54) **FERTIGTEIL-STALLGEBÄUDE**
PRE-FABRICATED STABLING
ETABLE PREFABRIQUEE

(30) Priorität: 12.11.1999 DE 19954565; 26.11.1999 DE 19957090
(43) Veröffentlichungstag der Anmeldung: 07.08.2002
(73) Patentinhaber: Durotec Stallbauelemente GmbH, 24755 Rendsburg (DE)
(72) Erfinder: MAIER, Wolfgang, 74595 Langenburg (DE)
(74) Vertreter: Bohnenberger, Johannes, Dr.
(86) Internationale Anmeldenummer: EP0011136
(87) Internationale Veröffentlichungsnummer: WO01035730

(56) Entgegenhaltungen:
- EP-A- 0 858 736
- FR-A- 2 467 944
- US-A- 5 950 565

## Beschreibung

Die Erfindung betrifft ein Fertigteil-Stallgebäude aus aneinandergereihten, modulbildenden Betonfertigteilen.

Unter Einsatz von Betonfertigteilen erstellte Stallgebäude sind bekannt.

Im Firmenprospekt "Ställe in kürzester Bauzeit" der Fa. Farmbau GmbH, 94595 Langenburg, DE, wird ein solches Stallgebäude beschrieben, welches unter Einsatz von Außenwandelementen mit innenliegender Dämmung - sog. Betonsandwichelementen -, Trennwandelementen und Güllekanalelementen montiert wird. Die Montage erfolgt auf einer Ortbeton-Bodenplatte, die bauseits in der erforderlichen Qualität erstellt werden muß, und das Gebäude wird mit einer herkömmlichen, in Zimmermannsarbeit vor Ort erstellten Dachkonstruktion überdacht. Ungeachtet des Einsatzes großformatiger Außenwandelemente ist zur Errichtung dieses Stallgebäudes ein relativ hoher Anteil qualifizierter bauseitiger Leistungen erforderlich, was sich in relativ hohen Gestehungskosten niederschlägt.

Es ist daher Aufgabe der Erfindung, ein verbessertes Fertigteil-Stallgebäude anzugeben, das insbesondere mit einem deutlich verringerten Volumen an bauseitigen Leistungen und zu wesentlich niedrigeren Kosten erstellt werden kann.

Diese Aufgabe wird durch ein Fertigteil-Stallgebäude mit den Merkmalen des Anspruchs 1 gelöst.

Die Erfindung schließt die grundlegende Überlegung ein, eine solche Fertigteilkonstruktion für ein Stallgebäude anzugeben, die mit einfachen Streifenfundamenten auskommt und nicht länger die aufwendige bauseitige Erstellung einer Ortbeton-Bodenplatte erfordert. Auf dieser Überlegung baut der weitere Gedanke auf, die Betonfertigteile als integrale Außenwand-Boden-Innenwand-Elemente in selbsttragender Weise auszuführen. Derartige Fertigteile, die bis zu einem gewissen Grade schon als Raumzellen zu bezeichnen sind, können ohne größeren manuellen Arbeitsaufwand auf einfachen Streifenfundamenten aneinandergereiht werden.

In einer bevorzugten Ausführung wird der gesamte untere Abschnitt der Betonfertigteile als ein Güllebehälter bzw. "Güllekeller" in Wannenform aus einem Stück gefertigt, speziell gegossen. Damit ist eine flüssigkeitsdichte Fertigung möglich, es gibt keine Angußnähte im Bereich der Güllewanne und das gesamte Betonfertigteil wird statisch hochwertiger.

Die Fertigung der Betonfertigteile als Module des Stallgebäudes erfolgt bevorzugt in einer Batterieschalung, in der mehrere (bevorzugt 5) Module gleichzeitig gegossen werden. Hierbei werden vorab einzelne Beton-Sandwich-Elemente für den Außenwandbereich und Beton-Fertigteilelemente für den Innenwandbereich gefertigt. Diese werden auf den Kopf gestellt vor der Stahl-Batterieschalung angeordnet, wobei aus diesen Fertigteilelementen herausragende Stahlarmierungen in die Wannenform hineinragen und bei dem erwähnten einstöckigen Guß der Güllewannen mit in diese eingegossen werden.

Weiterhin schließt die Erfindung den Gedanken ein, die Höhenabmessungen der Fertigteile vorzugsweise so festzulegen, daß sie grundsätzlich das Auflegen von Dachelementen ohne weitere Unterkonstruktion ermöglichen. In einer weiteren vorteilhaften Ausprägung des Erfindungsgedankens ist ein eine Dachunterkonstruktion bildendes Element (Giebeldreieck) derart klappbar mit dem Betonfertigteil verbunden, das es in diesem ohne zusätzlichen Bedarf an Transporthöhe transportiert und auf der Baustelle aus diesem herausgeklappt werden kann. In beiden Ausprägungen ist auf der Baustelle kein oder nur ein geringer Aufwand zur Realisierung der Dachunterkonstruktion erforderlich. Weiterhin schließt die Erfindung den Gedanken ein, in den Fertigteilen bereits die (an sich bekannte und bewährte) Güllekanalstruktur des erforderlichen Güllekellers durch Vorsehen entsprechender Kanalwände vorzuprägen. Beide Maßnahmen ergeben jeweils ein spürbare weitere Reduzierung der bauseits zu erbringenden Leistungen und erhöhen damit den Vorfertigungsgrad mit dem Ergebnis einer Kostensenkung.

Neben der Arbeitszeit- und Kosteneinsparung besteht ein wesentlicher Vorteil der vorgeschlagenen Konstruktion darin, daß diese praktisch vollständig wieder demontier- und umsetzbar ist.

Ein erfindungsgemäßes Fertigteil-Stallgebäude besteht aus mindestens in einer Richtung gereihten Betonfertigteilen dieser Art, vorzugsweise aber aus zwei (oder auch mehreren) Reihen solcher Elemente mit dazwischen liegenden Durchgangsbereichen. Grundsätzlich kann ein Stallgebäude aus einem einzigen Fertigteiltyp oder aber aus unterschiedlichen Typen errichtet werden. Darüber hinaus sind Mischformen möglich, wobei bestimmte Abschnitte eines Stallgebäudes aus aneinandergereihten Fertigteilen eines ersten Typs und andere Abschnitte aus einer Kombination verschiedener Typen gebildet sind.

Die Erfindung schließt auch ein zweistöckiges Fertigteil-Stallgebäude aus übereinandergestellten Betonfertigteil-Modulen ein. Hierbei weisen die unteren Module eine mit der Außenhöhe übereinstimmende Innenhöhe auf, und die oberen Module zeichnen sich durch die weiter oben erwähnten Mittel zur Realisierung einer einfach zu erstellenden Dachkonstruktion aus.

In einer zweckmäßigen Ausführung weist mindestens ein Teil der Betonfertigteile jeweils mindestens einen Durchgangs-Ausschnitt ("Türausschnitt") auf. Der Spezifik einer Stallkonstruktion speziell für die Schweinezucht Rechnung tragend, liegt die Unterkante des Durchgangs-Ausschnitts deutlich oberhalb der Oberfläche der Bodenplatte, so daß ein Güllekeller gebildet wird. Dieser wird beim fertigen Gebäude nach oben hin durch aufgelegte Spaltenböden abgeschlossen, deren Oberfläche im wesentlichen mit der Unterkante des Durchgangs-Ausschnitts fluchtet. Der Durchgangs-Ausschnitt kann in einer Ausführung derart an einer Seitenkante der Innenwand des Betonfertigteils vorgesehen und so bemessen sein, daß bei der Aufstellung zweier derartiger Betonfertigteile miteinander zugewandten Ausschnittsbereichen ein Durchgangs-Ausschnitt mit der erforderlichen Gesamtbreite entsteht. Jedes Element hat also in dieser Ausführung nur einen "halben" Durchgangsbereich. In einer anderen Ausführung ist der Durchgangs-Ausschnitt mit dem gesamten erforderlichen Querschnitt (bevorzugt annähernd mittig) in der Innenwand des Fertigteils vorgesehen.

Weiterhin weist mindestens ein Teil der Betonfertigteile mindescens eine den Außenwandabschnitt mit dem Innenwandabschnitt verbindende Seitenwand auf. Deren Oberkante verläuft zwischen der (höheren) Oberkante der Innenwand und der (niedrigeren) Oberkante der Außenwand unter einem kleinen Winkel geneigt, so daß durch Auflegen von Dachbedeckungselementen in einfacher Weise ein Spitz- oder Pultdach mit geringer Neigung gebildet werden kann. Zur zusätzlichen Abstützung der entsprechenden Dachelemente können in einer bevorzugten Ausführung im Bereich der Oberkante der Seitenwand ein oder mehrere im wesentlichen senkrecht aus der Ebene hervorstehende Pfettenelemente vorgesehen sein.

In einem der erforderlichen Höhe des Güllekellers entsprechenden Abstand von der Unterkante der Seitenwand sowie auf der Außenseite der Innenwand ist zweckmäßigerweise ein Spaltenauflagerabschnitt vorgesehen, auf den die oben erwähnten Spaltenböden aufgelegt werden können. Diese Spaltenauflagerabschnitte sind bevorzugt an den entsprechenden Wandabschnitt einstückig angeformt. Die Betonfertigteile können weiterhin einen mindestens abschnittsweise geschlossenen Stallboden oberhalb der Bodenplatte aufweisen, der - beispielsweise aus Beton, Gußeisen, Kunststoff oder anderem geeigneten Material - vorgefertigt oder bauseits erstellt werden kann.

In speziellen Ausführungen umfassen die Betonfertigteile nicht nur eine Seitenwand, sondern zwei Seitenwände. Diese können auf den seitlichen Begrenzungskanten der Bodenplatte errichtet sein. Eine besonders vorteilhafte Fortbildung dieser Ausführung sieht aber vor, daß nur eine der Seitenwände über einer Seitenkante der Bodenplatte liegt, während die andere sich über dem Inneren der Bodenplatte erhebt, derart, daß das Fertigteilelement eineinhalb Raumabteile umfaßt. In dieser Ausführung weist es zweckmäßigerweise auch zwei Durchgangs-Ausschnitte auf, und zwar einen ersten Ausschnitt mit voller Breite zur Erschließung des in dem Fertigteil gebildeten abgeschlossenen Raumabteils und einen zweiten Ausschnitt mit halber Breite in dem offenen halben Raumabteil. Werden zwei derartige Fertigteilelemente in zueinander symmetrischer Anordnung gereiht, so werden daraus insgesamt drei Raumabteile mit drei Durchgangs-Ausschnitten gebildet.

Fertigungsseitig werden Stahlbetonfertigteile für die Seitenwände, die Kammertrenn-Längswand und Güllekanalwände vorgefertigt und miteinander verschraubt. Im Anschluß daran wird die Bodenplatte gegossen, so daß die einzelnen Bauteile, das Modul bildend, fest und integral mit einander verbunden sind. Alternativ besteht die Möglichkeit, die mittlere Güllewand auch nachträglich durch Verschrauben mit den Seitenwänden einzusetzen, wobei hier jedoch für entsprechende Dichtmaßnahmen Sorge zu tragen ist. Um in einem erfindungsgemäßen Fertigteil-Stallgebäude auf bekannte und bewährte Weise den Gülleabzug nach dem Prinzip des Wechselstaus vornehmen zu können, sind in den Güllekanalwänden zweckmäßigerweise zur Bodenplatte hin offene Ausnehmungen vorgesehen, die eine Fluidverbindung zwischen benachbarten Güllekanälen schaffen.

In einer anderen Ausführung entfallen diese Ausnehmungen, was die Möglichkeit bietet, den Gülleabzug nach dem normalen Stauverfahren vorzunehmen.

Auch die oben erwähnten Pfettenelemente zur zusätzlichen Abstützung der Dachbedeckung sind zweckmäßigerweise separat gefertigte, balkenartige Teile, die nachträglich - aber bevorzugt noch im Rahmen der Vorfertigung - mit der Seitenwand verbunden, insbesondere verschraubt, werden.

Die Außenwandabschnitte sind in energiesparender Weise und im Interesse gesunder Aufzucht- und Haltebedingungen für die Schweine insbesondere als Sandwich-Wand mit betonummantelter Dämmschicht ausführt. Die Dämmschicht besteht insbesondere aus Styropor.

Die Bedachung des Stallgebäudes erfolgt in rationeller und kostengünstiger Weise insbesondere mit Sandwich-Trapezblechelementen, die direkt auf die Umfassungswände der Fertigteile und die ggf. vorgesehenen Pfettenelemente aufgelegt sind. Bei aus zwei oder mehreren Reihen von Fertigteilelementen gebildeten Stallgebäuden sind die Durchgangsbereiche zwischen den Stallabteilen bevorzugt zumindest teilweise transparent überdacht, insbesondere unter Einsatz von PVC-Lichtplatten.

Auf die Güllekanalwände bzw. die wahlweise vorgesehenen Spaltenauflager sind als Stallboden mindestens abschnittsweise (in an sich bekannter Weise) Spaltenböden aufgelegt. Bei einem zwei- oder mehrreihigen Stallaufbau sind Spaltenböden natürlich auch in den Gängen vorgesehen, wobei sie dort insbesondere auf die nach obigem wahlweise vorgesehenen Spaltenauflager an den Innenwänden der Fertigteilelemente aufgelegt sind. Unterhalb dieser Spaltenböden in den Gangbereichen verlaufen insbesondere Gülle-Entsorgungsleitungen bzw. -kanäle, die über Durchlässe in den Innenwänden mit den Güllekanälen in den Fertigteilen in Verbindung stehen. Die Durchlässe können bauseits erzeugt werden, bevorzugt ist aber auch hier eine vorgefertigte Ausführung.

Die Außenabmessungen der Fertigteile orientieren sich primär an den Transportmöglichkeiten und sollten daher übliche Containerabmessungen möglichst nicht überschreiten; im übrigen liegt die Länge (der Abstand zwischen den Außenseiten der Außen- und der Innenwand) zwischen 5 und 12 m und die Breite im Bereich zwischen etwa 2,5 und 4 m. Die Stärken der Innenwand, der Trennwände und der Bodenplatte richten sich nach den statischen Erfordernissen und liegen für die Wände insbesondere im Bereich zwischen 80 und 140 mm und für die Bodenplatte im Bereich zwischen 100 und 160 mm, während die Außenwand aufgrund der eingebauten Dämmschicht eine größere Dicke, bevorzugt im Bereich zwischen 180 und 360 mm, hat.

In einer zur Gewährleistung eines einfachen und zügigen Absetzens und Aneinanderreihens vorteilhafter Ausführung weisen die Betonfertigteile geeignete Mittel zum Anschlag eines Hebezeuges auf, insbesondere Rohre oder andere Hohlprofile im Bereich der Bodenplatte zur Einführung von Tragstangen, die beispielsweise über Flacheisen-Halter mit einem Hebezeug erfaßt werden können und ein nahezu abstandsfreies Absetzen des betreffenden Betonfertigteils neben dem zuletzt abgesetzten erlauben. Bei dieser Ausführung wird nach dem Absetzen der Eingriff zwischen den Flacheisen am Hebezeug und den Tragstangen gelöst, und die Tragstangen werden zur noch freien Seite des Betonfertigteils hin herausgezogen und stehen für einen nächsten Transportvorgang zur Verfügung.

Vorteile und Zweckmäßigkeiten der Erfindung ergeben sich im übrigen aus den Unteransprüchen sowie der nachfolgenden Beschreibung bevorzugter Ausführungsbeispiele anhand der Figuren.

Von diesen zeigen:
die Fig. 1a und 1b schematische Horizontal- bzw. Vertikalschnittdarstellungen durch einen Abschnitt eines Fertigteil-Stallgebäudes gemäß einer ersten Ausführungsform der Erfindung,
die Fig. 2a bis 2g in verschiedenen Einzelansichten in Art einer Explosionsdarstellung die Komponenten eines Betonfertigteils für ein Fertigteil-Stallgebäude gemäß einer weiteren Ausführung der Erfindung,
die Fig. 3 und 4 verschiedene Grundrißdarstellungen von Fertig-Stallgebäuden gemäß Ausführungsformen der Erfindung mit unterschiedlichen Raumaufteilungen,
Fig. 5 eine perspektivische Ausschnittdarstellung eines Fertigteil-Stallgebäudes gemäß einer weiteren Ausführungsform der Erfindung und
Fig. 6 eine schematische Querschnittsdarstellung eines Fertigteil-Stallgebäudes gemäß einer weiteren Ausführungsform der Erfindung.

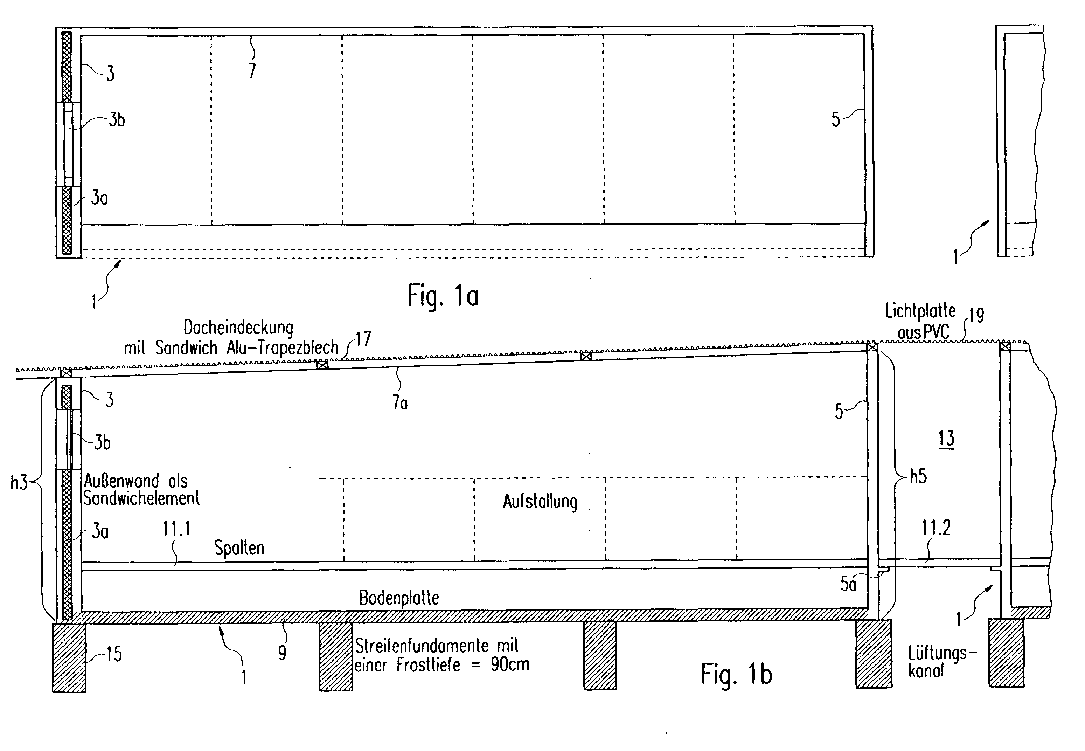

Fig. 1a und 1b zeigen Ausschnittdarstellungen eines Fertigteil-Stallgebäudes, die im wesentlichen ein Betonfertigteil 1 darstellen. Das Betonfertigteil 1 umfaßt einen Außenwandabschnitt 3 in Sachwich-Bauweise mit einer Styropor-Dämmschicht 3a und einem Fenster 3b, einen Innenwandabschnitt 5, eine Seitenwand 7 und eine Bodenplatte 9. In Fig. 1b ist zu erkennen, daß die Außenhöhe h3 des Stallgebäudes, d. h. die Höhe des Außenwandabschnittes 3, kleiner ist als die Innenhöhe h5, d. h. die Höhe des Innenwandabschnitts 5. Die obere Begrenzungsgrenze 7a der Seitenwand 7 ist folglich zur Außenwand 3 hin geneigt.

Im Inneren des Betonfertigteils 1 ist in einer Höhe von ca. 30 cm über der Bodenplatte 1 ein zu dieser parallel verlaufender Spaltenboden 11.1 vorgesehen, der auf (hier nicht dargestellten) Auflagern bzw. Güllekanalwänden auf der Bodenplatte 9 ruht. Ein weiterer Spaltenboden 11.2 ist in einem Durchgangs-Abstandsbereich 13 zwischen einem ersten und einem zweiten Betonfertigteil 1 vorgesehen. Dieser Spaltenboden 11.2 liegt auf Innenwand-Spaltenauflagern 5a an den dem Durchgangs-Abschnittsbereich 13 zugewandten Außenflächen der Innenwandabschnitte 5 auf.

Die Betonfertigteile 1 ruhen auf jeweils 4 parallel zur Außenwand des Stallgebäudes verlaufenden Streifenfundamenten 15. Der Innenraum der Betonfertigteile 1 ist mit einer Dacheindeckung 17 aus Sandwich-Aluminium-Trapezblech versehen, und der Durchgangs-Abstandsbereich ist mit einer PVC-Lichtplatte 19 überdacht.

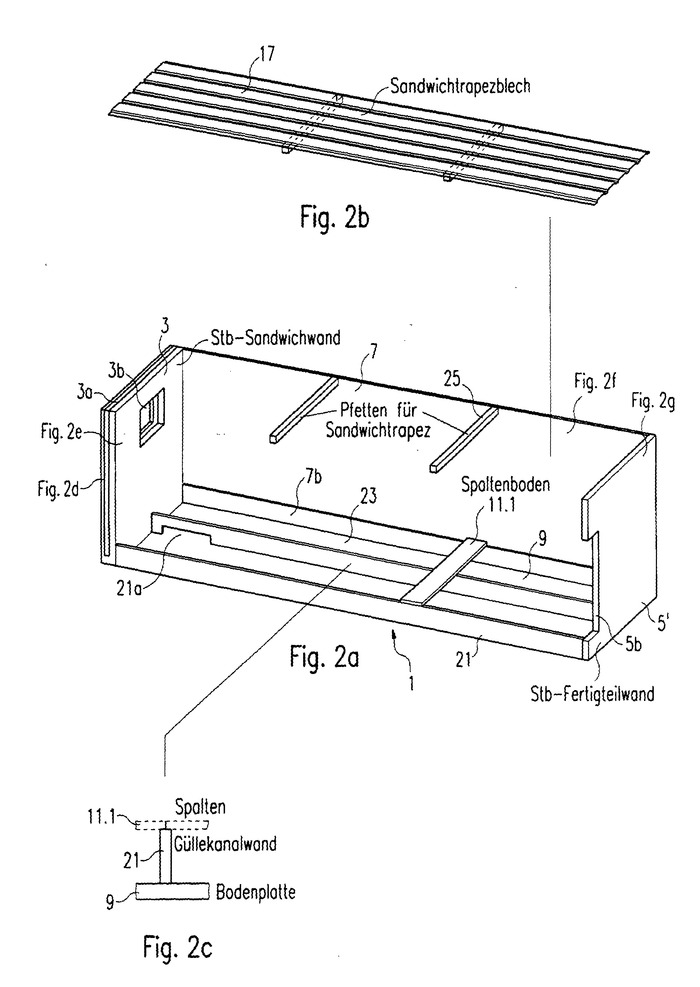

In Fig. 2a bis 2g ist der Aufbau eines modifizierten Betonfertigteils 1' mit Bedachung in einer perspektivischen Darstellung (Fig. 2a) sowie mehreren Detail-Darstellungen genauer gezeigt. Mit der Ausführung nach Fig. 1a und 1b übereinstimmende Elemente sind mit denselben Bezugsziffern wie dort bezeichnet und werden hier nicht nochmals erläutert.

In Fig. 2a ist zu erkennen, daß die Innenwand 5' einen Durchgangs-Ausschnitt 5b mit der halben Breite eines normalen Durchgangs aufweist, so daß bei Aneinanderreihung von zwei symmetrisch ausgeführten Betonfertigteilen 1' mit einander zugewandten Durchgangs-Ausschnitten 5b ein vollwertiger Durchgang mit normaler Breite entsteht. Es ist zu erkennen, daß die Unterkante des Durchgangs-Ausschnittes 5b annähernd mit der Oberkante von Güllekanalwänden 21 auf gleichem Niveau liegt, die - parallel zur Seitenwand 7 - in Längsrichtung des Betonfertigteils 1 von der Außenwand 3 bis zur Innenwand 5 verlaufen. Die mittlere Güllekanalwand 21 weist nahe der Außenwand 3 einen der Bodenplatte 9 zugewandten Ausschnitt 21a als Fluidverbindung zwischen den beiden Güllekanälen 23 in dem Betonfertigteil 1 auf. Die Anordnung von Bodenplatte 9, Güllekanalwand 21 und Spaltenboden 11.1 ist in Fig. 2c im Querschnitt näher dargestellt.

Die Seitenwand 7 hat im unteren Bereich ein integral angeformtes Seitenwand-Spaltenauflager 7b mit gleicher Höhe wie die Güllekanalwände 21, welches neben den letzteren zur Lagerung der Spaltenböden 11.1 dient. Im Bereich der Oberkante sind an der Seitenwand 7 zwei Dachpfetten 25 als zusätzliche Träger für die Dacheindeckung angebracht.

Das in Fig. 2b gezeigte Sandwichtrapezblech 17 liegt beim fertiggestellten Stallgebäude auf den Umfassungswänden des Betonfertigteils 1 sowie den Pfetten 25 mit leichter Neigung zur Außenseite des Gebäudes auf.

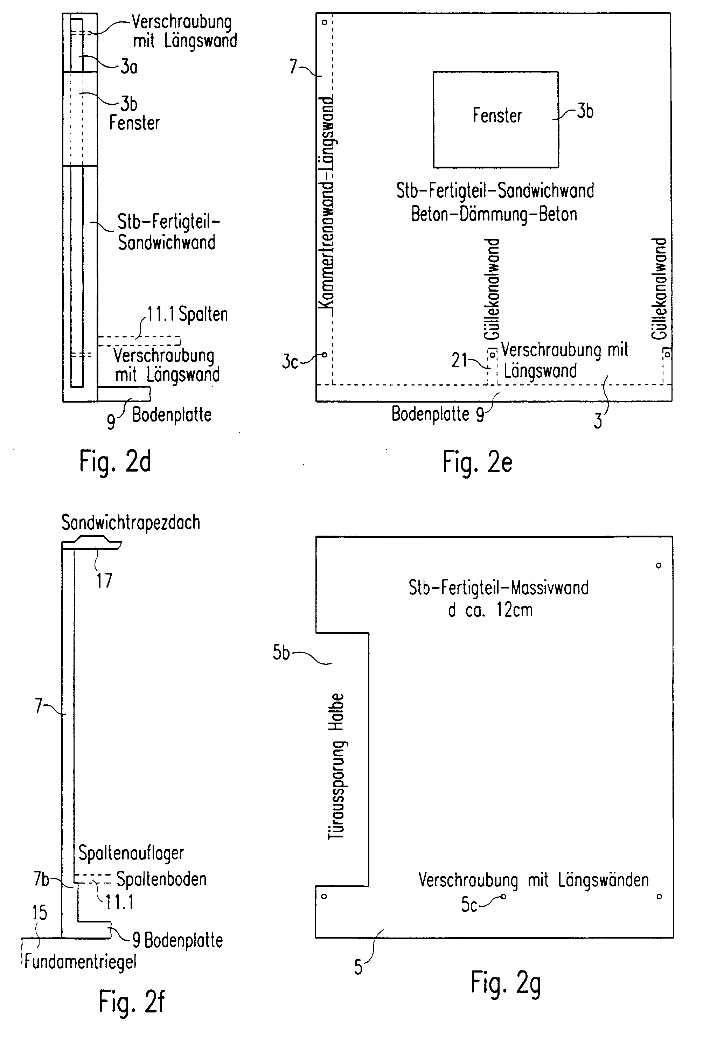

Fig. 2d und 2e zeigen konstruktive Einzelheiten im Bereich der Außenwand 3. Es ist insbesondere zu erkennen, daß mehrere Bohrlöcher 3c zum Einführen von Gewindebolzen zur Verschraubung der Außenwand 3 mit der Seitenwand 7 bzw. mit den beiden Güllekanalwänden 21 vorgesehen sind.

Fig. 2f und 2g zeigen die Seitenwand 7 bzw. die Innenwand 5 detaillierter, wobei zu erkennen ist, daß auch die Innenwand 5 Bohrlöcher 5c zur Verschraubung mit der Seitenwand bzw. den Güllekanalwänden (in Fig. 2g nicht dargestellt) aufweist.

Bei dem Betonfertigteil 1' handelt es sich - anders als beim Betonfertigteil 1 nach Fig. 1a und 1b, das keinen Durchgangs-Ausschnitt aufweist - um ein solches, das sowohl eine Seitenwand als auch einen Durchgangs-Ausschnitt hat.

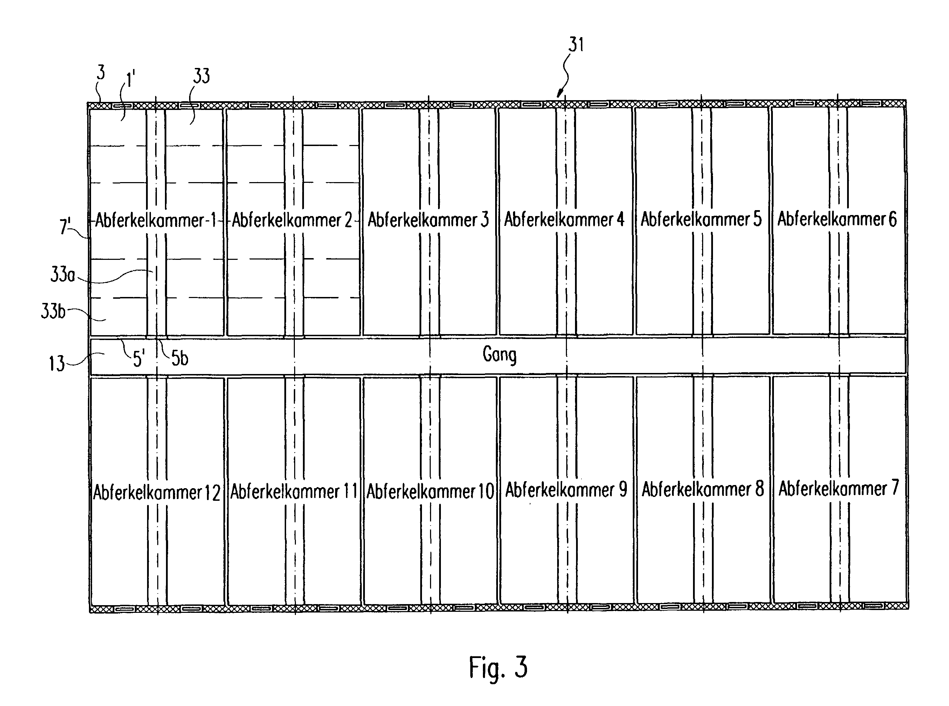

Ausschließlich aus derartigen Betonfertigteilen ist das Fertigteil-Stallgebäude 31 nach Fig. 3 errichtet, wobei zwei zueinander symmetrische Ausführungen des Betonfertigteils 1' zum Einsatz kommen. Diese werden jeweils paarweise mit einander zugewandten Durchgangs-Ausschnitten 5b der Innenwände 5 montiert. Ein solches Paar von Betonfertigteilen 1' bildet jeweils eine Abferkelkammer 33. Durch (gestrichelt gezeichnete) Aufstallungen werden beidseits eines Durchgangsbereiches 33a in jeder Abferkelkammer 33 sechs Buchten 33b gebildet. Das Stallgebäude 31 besteht aus zwei durch einen Gang 13 getrennten Reihen solcher Abferkelkammern. In der Darstellung nach Fig. 3 sind die gebäudeaußenseitigen Seitenwände 7' nicht gedämmt; es ist aber das Aufsetzen von speziellen Dämmelementen von außen auf solche außenliegenden Seitenwände ebenso möglich wie auf ggf. außenliegende Innenwände 5'.

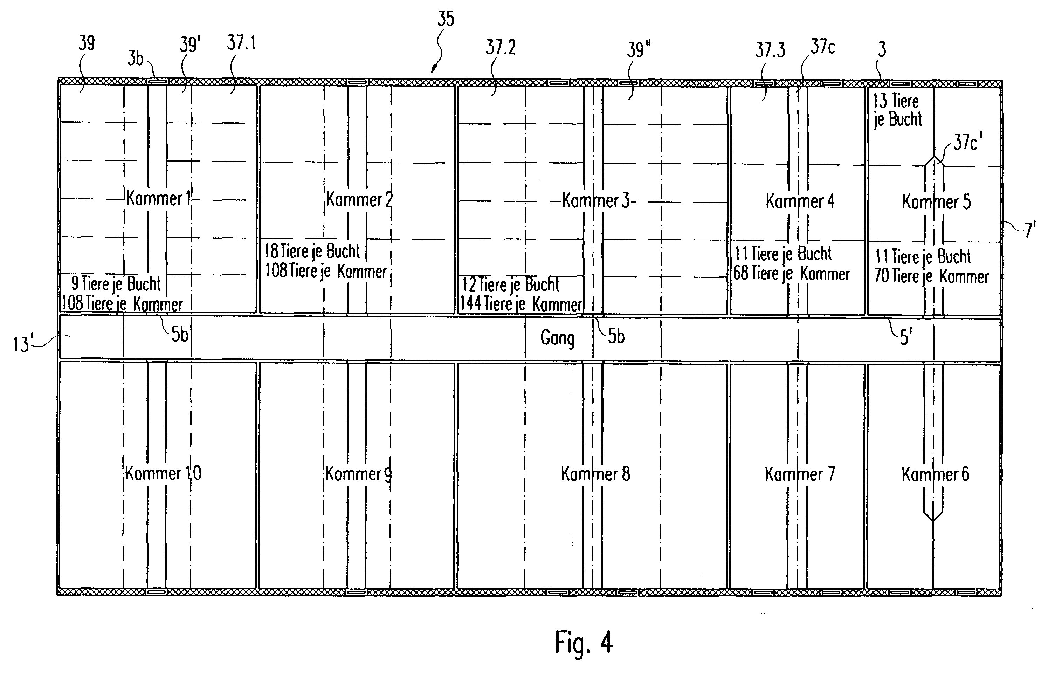

Fig. 4 zeigt ein anders aufgebautes Fertigteil-Stallgebäude 35, das in unterschiedlich große Kammern 37.1, 37.2 bzw. 37.3 aufgeteilt ist. Die auf der rechten Seite der Figur zu erkennenden kleinsten Kammern 37.3 (Kammern 4 bis 7) sind auf dieselbe Weise wie die Abferkelkammern 33 des Stallgebäudes 31 nach Fig. 3 aus Betonfertigteilen 1' der in Fig. 2a bis 2g gezeigten Art zusammengefügt. Sie sind allerdings durch anders angeordnete (wiederum gestrichelt gezeichnete) Aufstallungen anders eingeteilt als bei der Ausführung nach Fig. 3, und die Aufteilung erfolgt bei Fig. 4 nach zwei verschiedenen Arten mit bis zur Außenwand durchgehenden bzw. nicht durchgehendem Durchgangsbereich 37c bzw. 37c'.

Die Kammern des Typs 37.1 (Kammern 1, 2, 9 und 10) sind aus jeweils zwei fenster- und durchgangslosen, zueinander symmetrischen Betonfertigteilen 39 sowie einem zwischen diesem angeordneten Fertigteil 39' mit einem Fenster 3b in der Außenwand 3 und einem diesem gegenüberliegenden Durchgangs-Ausschnitt 5b in der Innenwand 5 zusammengesetzt. Wie aus dem Vergleich von Kammer 1 mit Kammer 2 deutlich wird, können die Kammern natürlich auf unterschiedliche Weise durch Aufstallungen in Buchten unterteilt werden.

Die größten Kammern des Typs 37.2 (Kammer 3 und 8) bestehen aus jeweils zwei außenliegenden Betonfertigteilen 39 und zwei innenliegenden Betonfertigteilen 39", die jeweils ein Fenster 3b und einen halben Durchgangsbereich haben. Die benachbarte Aufstellung zweier klappsymmetrisch ausgeführter Fertigteile 39" ergibt dann - in bereits oben erwähnter Weise - einen Durchgangsbereich 5b mit vollem Querschnitt.

Auch bei dem in Fig. 4 gezeigten Stallgebäude 35 werden die außenliegenden Seitenwände bevorzugt mit zusätzlichen Dämmelementen versehen.

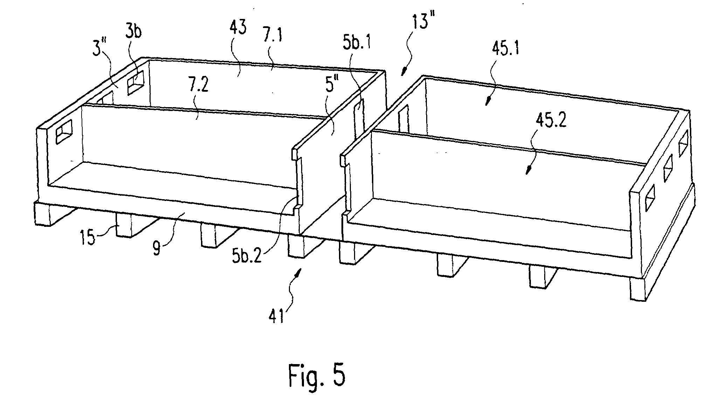

Fig. 5 zeigt in perspektivischer Prinzipdarstellung einen Ausschnitt aus einem weiteren Fertigteil-Stallgebäude 41, das aus zwei Reihen von Betonfertigteilen 43 mit einem Gang 13" dazwischen aufgebaut ist. Es ist zu erkennen, daß die Betonfertigteile 43 hier jeweils zwei Seitenwände 7.1, 7.2, einen Außenwandabschnitt 3" mit drei Fenstern 3b und einen Innenwandabschnitt 5" mit einem vollen Durchgangs-Ausschnitt 5b.1 und einem "halben" Durchgangs-Ausschnitt 5b.2 aufweisen.

Die Seitenwände 7.1, 7.2 und die Durchgangs-Ausschnitte 5b.1 und 5b.2 sind so angeordnet, daß in jedem Betonfertigteil 43 eine abgeschlossene erste Kammer 45.1 und eine zur Seite hin offene halbe Kammer 45.2 gebildet ist. Durch Nebeneinander-Aufstellung zweier zueinander symmetrisch ausgeführter Betonfertigteile 43 wird aus den beiden halben Kammern 45.2 eine weitere Kammer mit der Geometrie der Kammer 45.1, so daß jeweils zwei Betonfertigteile drei Stallkammern bilden.

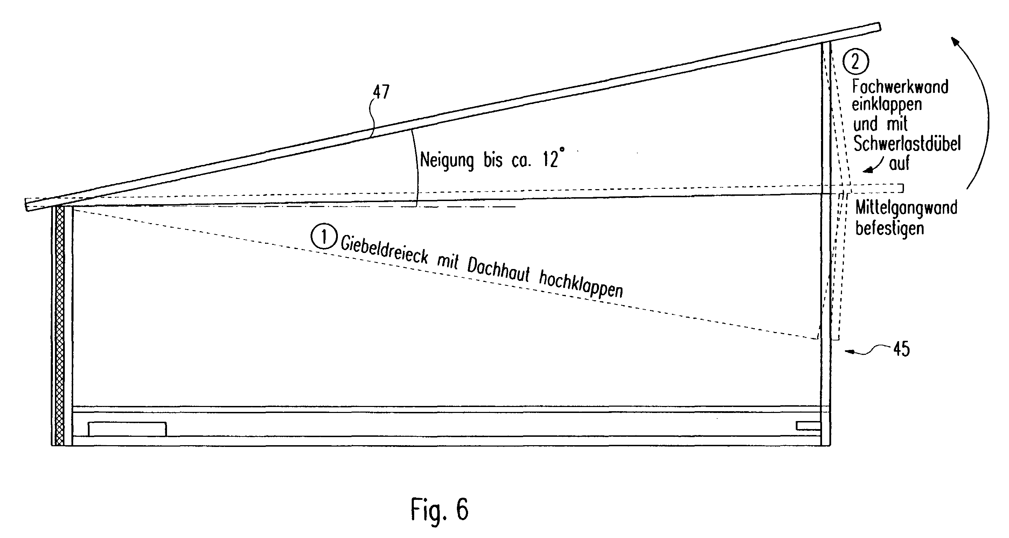

Fig. 6 zeigt in einer Prinzipskizze ein Betonfertigteil-Modul 45 mit einem für den Transport einklappbaren und auf der Baustelle aufklappbaren Giebeldreieck 47 als Dachunterkonstruktion. Es ist zu erkennen, daß mit dieser Konstruktion (insbesondere aus Holzständern und -sparren) eine Gewicht- und Transporthöhe sparende und gleichwohl relativ große Dachneigungen ermöglichende Dachkonstruktion realisierbar ist. Bei dieser Ausführung kann die Dachhaut bzw. -bedeckung bereits auf dem vorgefertigten Modul angebracht sein, wonach bauseits lediglich die Stoßbereiche zwischen den Dachhäuten der einzelnen Module abzudichten sind.

Die Ausführung der Erfindung ist nicht auf die oben beschriebenen Beispiele beschränkt, sondern ebenso in einer Vielzahl von Abwandlungen möglich, die im Rahmen fachgemäßen Handelns liegen. Insbesondere sind weitere, verschiedenartige Seitenwand-, Fenster- und Durchgangs-Anordnungen möglich, und aus entsprechend modifizierten Betonfertigteilen können vielfältig differenzierte Fertigteil-Stallgebäude errichtet werden.

### Bezugszeichenliste

- 1; 1'; 39, 39', 39"; 43; 45: Betonfertigteil
- 3, 3": Außenwandabschnitt
- 3a: Styropor-Dämmschicht
- 3b: Fenster
- 3c: Bohrloch
- 5; 5'; 5": Innenwandabschnitt
- 5a: Innenwand-Spaltenauflager
- 5b: Durchgangs-Ausschnitt
- 5c: Bohrloch
- 7; 7'; 7.1, 7.2: Seitenwand
- 7a: obere Begrenzungskante
- 7b: Seitenwand-Spaltenauflager
- 9: Bodenplatte
- 11.1: Spaltenboden (im Betonfertigteil)
- 11.2: Spaltenboden (im Durchgangs-Abstandsbereich)
- 13; 13': Durchgangs-Abstandsbereich (Gang)
- 15: Streifenfundament
- 17: Dacheindeckung (Sandwichtrapezblech)
- 19: PVC-Lichtplatte
- 21: Güllekanalwand
- 23: Güllekanal
- 25: Dachpfette
- 31; 35; 41: Fertigteil-Stallgebäude
- 33: Abferkelkammer
- 33a; 37c: Durchgangsbereich
- 33b: Bucht
- 37.1, 37.2, 37.3; 45.1, 45.2: Kammer
- 47: Dachkonstruktionselement (Giebeldreieck)

## Patentansprüche

1. Fertigteil-Stallgebäude (31; 35; 41), insbesondere Schweinestall, mit einer Mehrzahl von in wenigstens einer Richtung gereihten, modulbildenden Betonfertigteilen (1; 1'; 39, 39', 39"; 43), welche jeweils mindestens umfassen:
- einen Außenwandabschnitt (3, 3") mit einer Wärmedämmschicht (3a), der eine Außenhöhe (h3) aufweist,
- einen zum Außenwandabschnitt parallelen Innenwandabschnitt (5; 5'; 5"), der eine insbesondere gegenüber der Außenhöhe um 15 bis 50 cm größere Innenhöhe (h5) aufweist, und
- eine den Außenwandabschnitt und Innenwandabschnitt verbindende und gegeneinander aussteifende, selbsttragende Bodenplatte (9), auf der mindestens eine den Außenwandabschnitt mit dem Innenwandabschnitt verbindende Güllekanalwand (21) vorgesehen ist.

2. Fertigteil-Stallgebäude nach Anspruch 1,
**dadurch gekennzeichnet, daß**
der untere Abschnitt der Betonfertigteile, insbesondere mit einer Höhe im Bereich zwischen 15 cm und 70 cm, mit den Güllekanalwänden (21) als Güllewanne einstöckig gegossen ist.

3. Fertigteil-Stallgebäude nach Anspruch 1 oder 2,
**dadurch gekennzeichnet, daß** mindestens ein Teil der Betonfertigteile (1'; 39', 39"; 43) mindestens einen Durchgangs-Ausschnitt (5b; 5b.1, 5b.2) im Innenwandabschnitt (5'; 5") aufweist, dessen Unterkante einen Abstand, insbesondere im Bereich zwischen 15 und 70 cm, von der Oberfläche der Bodenplatte (9) als Güllekeller-Höhenbereich aufweist.

4. Fertigteil-Stallgebäude nach Anspruch 3,
**dadurch gekennzeichnet, daß** mindestens ein Teil der Betonfertigteile (1'; 39"; 43) mindestens einen in einem Seitenkantenbereich des Innenwandabschnitts (5', 5") ausgenommenen Durchgangs-Ausschnitt (5b; 5b.1, 5b.2) mit halber Breite aufweist.

5. Fertigteil-Stallgebäude nach Anspruch 3 oder 4,
**dadurch gekennzeichnet, daß** mindestens ein Teil der Betonfertigteile (43) mindestens einen, insbesondere im wesentlichen mittigen, Durchgangs-Ausschnitt (5b.1) mit voller Breite aufweist.

6. Fertigteil-Stallgebäude nach einem der vorangehenden Ansprüche,
**dadurch gekennzeichnet, daß** mindestens ein Teil der Betonfertigteile (1; 1'; 39; 43) mindestens eine den Außenwandabschnitt mit dem Innenwandabschnitt verbindende Seitenwand (7; 7'; 7.1, 7.2) umfaßt, deren geradlinige Oberkante (7a) eine der Differenz zwischen der Innen- und Außenhöhe (h5, h3) entsprechende Neigung, insbesondere im Bereich zwischen 2° und 10°, aufweist.

7. Fertigteil-Stallgebäude nach Anspruch 6,
**dadurch gekennzeichnet, daß**
im Bereich der Oberkante der Seitenwand (7') zwischen dem Außenwand- und dem Innenwandabschnitt mindestens ein im wesentlichen senkrecht aus der Ebene der Seitenwand hervorstehendes Pfettenelement (25) vorgesehen ist.

8. Fertigteil-Stallgebäude nach Anspruch 6 oder 7,
**dadurch gekennzeichnet, daß**
im Bereich der Unterkante der Seitenwand (7') und/oder der Außenseite der Innenwand (5) ein Spalten- bzw. Bodenauflager (7b; 5a) vorgesehen ist, dessen Oberkante die gleiche Höhe wie die Güllekanalwand (21) bzw. -wände hat und der insbesondere einstückig mit der Seitenwand bzw. der Innenwand gebildet ist.

9. Fertigteil-Stallgebäude nach einem der Ansprüche 1 oder 3 bis 8,
**dadurch gekennzeichnet, daß**
die Güllekanalwände (21) als separat gefertigte Teile mit dem Außen- und Innenwandabschnitt (3; 5') verbunden, insbesondere verschraubt, sind.

10. Fertigteil-Stallgebäude nach einem der vorangehenden Ansprüche,
**dadurch gekennzeichnet, daß**
mindestens ein Teil der Güllekanalwände (21) eine zur Bodenplatte (9) hin offene Ausnehmung (21a) zur Schaffung einer Fluidverbindung zwischen benachbarten Güllekanälen (23) aufweist.

11. Fertigteil-Stallgebäude nach einem der vorangehenden Ansprüche,
**gekennzeichnet durch**
auf die Güllekanalwände (21) und wahlweise vorgesehenen Spaltenauflager (7b; 5a) aufgelegte Spaltenböden (11.1, 11.2).

12. Fertigteil-Stallgebäude nach einem der Ansprüche 7 bis 11,
**dadurch gekennzeichnet, daß**
die Pfettenelemente (25) als separat gefertigte Teile mit der Seitenwand (7') verbunden, insbesondere verschraubt, sind.

13. Fertigteil-Stallgebäude nach einem der vorangehenden Ansprüche,
**dadurch gekennzeichnet, daß**
der Außenwandabschnitt (3) als Sandwich-Wand mit betonummantelter Dämmschicht (3a), insbesondere Styropor-Dämmschicht, ausgeführt ist.

14. Fertigteil-Stallgebäude nach einem der vorangehenden Ansprüche,
**dadurch gekennzeichnet, daß**
in den Bodenplatten parallel zum Außen- und Innenwandabschnitt verlaufende Rohre bzw. Kanäle zur Aufnahme jeweils einer Tragstange zum Anheben bzw. Absetzen des jeweiligen Betonfertigteils vorgesehen sind.

15. Fertigteil-Stallgebäude nach einem der vorangehenden Ansprüche,
**gekennzeichnet durch**
eine Bedachung aus Sandwich-Trapezblechelementen (17), die insbesondere direkt auf die Umfassungswände und wahlweise vorgesehenen Pfettenelemente (25) aufgelegt sind.

16. Fertigteil-Stallgebäude nach einem der vorangehenden Ansprüche,
**gekennzeichnet durch**
parallel zum Außen- und Innenwandabschnitt der Betonfertigteile (1; 43) verlaufende Streifenfundamente (15) als Auflager für die Betonfertigteile.

17. Fertigteil-Stallgebäude nach Anspruch 16,
**dadurch gekennzeichnet, daß**
für jedes Betonfertigteil (1; 43) mindestens drei, bevorzugt vier, Streifenfundamente (15) vorgesehen sind.

18. Fertigteil-Stallgebäude nach einem der vorangehenden Ansprüche,
**dadurch gekennzeichnet, daß**
die Betonfertigteile (1; 1' ; 39, 39', 39'' ; 43) eine Länge im Bereich zwischen 5 und 12 m und eine Breite im Bereich zwischen 2,5 und 4 m aufweisen.

19. Fertigteil-Stallgebäude nach einem der vorangehenden Ansprüche,
**dadurch gekennzeichnet, daß**
die Innen- und Seitenwände (5; 5'; 5''; 7; 7'; 7.1, 7.2) eine Dicke im Bereich zwischen 80 und 140 mm, die Außenwand (3, 3") eine Dicke im Bereich zwischen 180 und 360 mm und die Bodenplatte (9) eine Dicke zwischen 100 und 160 mm aufweisen.

20. Fertigteil-Stallgebäude nach einem der vorangehenden Ansprüche,
**gekennzeichnet durch**
zwei mit einem Durchgangs-Abstandsbereich (13; 13'), insbesondere mit einer Breite zwischen 120 und 200 cm, einander gegenüber angeordnete Reihen von Betonfertigteilen (1; 1'; 39, 39', 39"; 43), wobei in dem Durchgangs-Abstandsbereich Spaltenböden (11.2) vorgesehen sind, welche insbesondere auf Spaltenauflager (5a) an den einander gegenüberliegenden Innenwänden (5) der Betonfertigteile aufgelegt sind.

21. Fertigteil-Stallgebäude nach Anspruch 20,
**dadurch gekennzeichnet, daß**
im Durchgangs-Abstandsbereich eine transparente Bedachung (19), insbesondere mit PVC-Lichtplatten, vorgesehen ist.

22. Fertigteil-Stallgebäude nach einem der vorangehenden Ansprüche,
**gekennzeichnet durch**
die Ausführung aus zueinander symmetrischen Betonfertigteilen (1; 43), die jeweils eine Seitenwand und einen Durchgangs-Ausschnitt mit halber Breite aufweisen und alternierend mit einander zugewandten Durchgangs-Ausschnitten (5b; 5b.2) bzw. einander zugewandten Seitenwänden (7) gereiht sind.

23. Fertigteil-Stallgebäude nach einem der vorangehenden Ansprüche,
**gekennzeichnet durch**
die Ausführung mit verschiedenen Betonfertigteilen (39, 39', 39"), die einen Durchgangs-Ausschnitt (5b) oder eine Seitenwand (7) aufweisen, wobei jeweils zwischen zwei Betonfertigteilen mit Seitenwand (39) entweder ein Betonfertigteil (39') mit mittigem Durchgangs-Ausschnitt mit voller Breite oder zwei Betonfertigteile (39") mit im Seitenkantenbereich angeordnetem Durchgangs-Ausschnitt mit halber Breite angeordnet sind.

24. Fertigteil-Stallgebäude nach einem der vorangehenden Ansprüche,
**gekennzeichnet durch**
eine zweistöckige Ausführung aus übereinandergestellten modulbildenden Betonfertigteilen (45), wobei die untere Reihe bzw. unteren Reihen von Betonfertigteilen (45) eine mit der Außenhöhe übereinstimmende Innenhöhe aufweisen.

25. Fertigteil-Stallgebäude nach einem der vorangehenden Ansprüche,
**dadurch gekennzeichnet, daß**
über der Bodenplatte (9) und der Güllekanalwand (21) mindestens abschnittsweise ein geschlossener Boden, insbesondere aus Beton, Gußeisen oder Kunststoff, vorgesehen ist.

26. Fertigteil-Stallgebäude nach einem der Ansprüche 1 bis 6, 8 bis 11 oder 13 bis 25,
**gekennzeichnet durch**
ein klappbar mit dem Außenwandabschnitt oder einer Seitenwand des Betonfertigteils (45) verbundenes Dachkonstruktionselement (47), wobei die Außenhöhe des Betonfertigteils (45) mit der Innenhöhe übereinstimmt.

27. Fertigteil-Stallgebäude nach Anspruch 26,
**dadurch gekennzeichnet, daß**
das Dachkonstruktionselement (47) zwei Giebeldreiecke mit einem sich zwischen diesem erstreckenden Dachhautabschnitt aufweist.

## Claims

1. Prefabricated livestock building (31; 35; 41), in particular a pig shed, comprising a plurality of module-forming precast concrete elements (1; 1'; 39, 39', 39"; 43), which are lined up in at least one direction and each comprise at least:
- one external wall portion (3, 3") with a heat-insulating layer (3a) and an external height (h3),
- one internal wall portion (5; 5'; 5") parallel to the external wall portion and having an internal height (h5), which is in particular 15 to 50 cm greater than the external height, and
- one self-supporting floor slab (9), which connects the external wall portion and internal wall portion and braces the latter against one another and on which at least one slurry channel wall (21) is provided, which connects the external wall portion to the internal wall portion.

2. Prefabricated livestock building according to claim 1,
**characterized in that**
the bottom portion of the precast concrete elements, in particular at a height in the region of between 15 cm and 70 cm, is cast in a single-storey manner with the slurry channel walls (21) as a slurry trough.

3. Prefabricated livestock building according to claim 1 or 2,
**characterized in that**
at least some of the precast concrete elements (1'; 39', 39"; 43) have in the internal wall portion (5'; 5") at least one passage cut-out (5b; 5b.1, 5b.2), the bottom edge of which is at a distance, particularly in the region of between 15 and 70 cm, from the surface of the floor slab (9) as a slurry cellar height region.

4. Prefabricated livestock building according to claim 3,
**characterized in that**
at least some of the precast concrete elements (1'; 39"; 43) have at least one half-width passage cut-out (5b; 5b.1, 5b.2) removed from a side edge region of the internal wall portion (5', 5").

5. Prefabricated livestock building according to claim 3 or 4,
**characterized in that**
at least some of the precast concrete elements (43) have at least one, in particular substantially central, full-width passage cut-out (5b.1).

6. Prefabricated livestock building according to one of the preceding claims,
**characterized in that**
at least some of the precast concrete elements (1; 1'; 39; 43) comprise at least one side wall (7; 7'; 7.1, 7.2), which connects the external wall portion to the internal wall portion and the rectilinear top edge (7a) of which has an inclination, in particular in the region of between 2° and 10°, which corresponds to the difference between the internal and external height (h5, h3).

7. Prefabricated livestock building according to claim 6,
**characterized in that**
in the region of the top edge of the side wall (7') between the external wall portion and the internal wall portion at least one purlin element (25) is provided, which projects in a substantially perpendicular manner from the plane of the side wall.

8. Prefabricated livestock building according to claim 6 or 7,
**characterized in that**
in the region of the bottom edge of the side wall (7') and/or of the outside of the internal wall (5) a split and/or floor footing (7b; 5a) is provided, the top edge of which has the same height as the slurry channel wall (21) or walls and which is formed in particular integrally with the side wall and/or internal wall.

9. Prefabricated livestock building according to one of claims 1 or 3 to 8,
**characterized in that**
the slurry channel walls (21) are connected, in particular screw-connected, as separately produced parts to the external and internal wall portions (3; 5').

10. Prefabricated livestock building according to one of the preceding claims,
**characterized in that**
at least some of the slurry channel walls (21) have a recess (21a) open towards the floor slab (9) for establishing a fluid connection between adjacent slurry channels (23).

11. Prefabricated livestock building according to one of the preceding claims,
**characterized by**
split floors (11.1, 11.2) laid onto the slurry channel walls (21) and optionally provided split footings (7b; 5a).

12. Prefabricated livestock building according to one of claims 7 to 11,
**characterized in that**
the purlin elements (25) are connected, in particular screw-connected, as separately produced parts to the side wall (7').

13. Prefabricated livestock building according to one of the preceding claims,
**characterized in that**
the external wall portion (3) takes the form of a sandwich wall with a concrete-encased insulating layer (3a), in particular an expanded polystyrene insulating layer.

14. Prefabricated livestock building according to one of the preceding claims,
**characterized in that**
in the floor slabs pipes and/or channels extending parallel to the external and internal wall portions are provided for receiving in each case a carrying rod for lifting and/or lowering the respective precast concrete element.

15. Prefabricated livestock building according to one of the preceding claims,
**characterized by**
a roof covering comprising sandwich trapezoidal sheet elements (17), which are laid in particular directly onto the enclosure walls and optionally provided purlin elements (25).

16. Prefabricated livestock building according to one of the preceding claims,
**characterized by**
strip foundations (15), which extend parallel to the external and internal wall portions of the precast concrete elements (1; 43), as footings for the precast concrete elements.

17. Prefabricated livestock building according to claim 16,
**characterized in that**
for each precast concrete element (1; 43) at least three, preferably four, strip foundations (15) are provided.

18. Prefabricated livestock building according to one of the preceding claims,
**characterized in that**
the precast concrete elements (1; 1'; 39, 39', 39"; 43) have a length in the region of between 5 and 12 m and a width in the region of between 2.5 and 4 m.

19. Prefabricated livestock building according to one of the preceding claims,
**characterized in that**
the internal and side walls (5; 5'; 5"; 7; 7'; 7.1, 7.2) have a thickness in the region of between 80 and 140 mm, the external wall (3, 3") has a thickness in the region of between 180 and 360 mm and the floor slab (9) has a thickness of between 100 and 160 mm.

20. Prefabricated livestock building according to one of the preceding claims,
**characterized by**
two rows of precast concrete elements (1; 1'; 39, 39', 39"; 43) disposed opposite one another with a passage gap region (13; 13'), in particular having a width of between 120 and 200 cm, wherein in the passage gap region split floors (11.2) are provided, which are laid in particular onto split footings (5a) on the mutually opposing internal walls (5) of the precast concrete elements.

21. Prefabricated livestock building according to claim 20,
**characterized in that**
in the passage gap region a transparent roof covering (19), in particular comprising PVC light panels, is provided.

22. Prefabricated livestock building according to one of the preceding claims,
**characterized by**
construction from mutually symmetrical precast concrete elements (1; 43), which comprise in each case a side wall and a half-width passage cut-out and are lined up alternately with the passage cut-outs (5b; 5b.2) and/or side walls (7) directed towards one another.

23. Prefabricated livestock building according to one of the preceding claims,
**characterized by**
construction with differing precast concrete elements (39, 39', 39"), which comprise a passage cut-out (5b) or a side wall (7), wherein in each case between two precast concrete elements plus side wall (39) either a precast concrete element (39') with a full-width central passage cut-out or two precast concrete elements (39") with a half-width passage cut-out disposed in the side edge region are disposed.

24. Prefabricated livestock building according to one of the preceding claims,
**characterized by**
a two-storey construction of superimposed module-forming precast concrete elements (45), wherein the bottom row and/or bottom rows of precast concrete elements (45) have an internal height corresponding to the external height.

25. Prefabricated livestock building according to one of the preceding claims,
**characterized in that**
provided at least in sections over the floor slab (9) and the slurry channel wall (21) is a closed floor, in particular of concrete, cast iron or plastics material.

26. Prefabricated livestock building according to one of claims 1 to 6, 8 to 11 or 13 to 25,
**characterized by**
a roof structure element (47), which is hinge-connected to the external wall portion or to a side wall of the precast concrete element (45), wherein the external height of the precast concrete element (45) corresponds to the internal height.

27. Prefabricated livestock building according to claim 26,
**characterized in that**
the roof structure element (47) comprises two gable triangles having a roof membrane portion extending between the latter.

## Revendications

1. Étable préfabriquée (31 ; 35 ; 41), en particulier porcherie, présentant une pluralité d'éléments préfabriqués en béton (1 ; 1' ; 39, 39', 39" ; 43) constitutifs de modules alignés au moins dans une direction, lesquels comprennent chacun au moins :
- une section de mur extérieur (3, 3") avec une couche calorifuge (3a), qui présente une hauteur extérieure (h3),
- une section de mur intérieur (5 ; 5' ; 5'') parallèle à la section de mur extérieur, qui présente une hauteur intérieure (h5) supérieure de 15 à 20 cm en particulier à la hauteur extérieure, et
- une dalle (9) autoporteuse, reliant et rigidifiant l'une par rapport à l'autre la section de mur extérieur et la section de mur intérieur, sur laquelle est prévue au moins une paroi de caniveau à lisier (21) reliant la section de mur extérieur à la section de mur intérieur.

2. Étable préfabriquée selon la revendication 1,
**caractérisée en ce que**
la section inférieure des éléments préfabriqués en béton est coulée en un seul étage en tant que cuve à lisier avec les parois de caniveau à lisier (21), en particulier avec une hauteur dans la plage comprise entre 15 cm et 70 cm.

3. Étable préfabriquée selon la revendication 1 ou 2,
**caractérisée en ce que**
au moins une partie des éléments préfabriqués en béton (1' ; 39', 39'' ; 43) présente au moins une découpe de passage (5b, 5b.1, 5b.2) dans la section de mur intérieur (5' ; 5") dont l'arête inférieure présente un écartement, en particulier dans la plage comprise entre 15 et 70 cm, de la surface de la dalle (9) en tant que plage de hauteur de fosse à lisier.

4. Étable préfabriquée selon la revendication 3,
**caractérisée en ce que**
au moins une partie des éléments préfabriqués en béton (1' ; 39'' ; 43) présente au moins une découpe de passage (5b, 5b.1, 5b.2) de demi-largeur ménagée dans une section d'arête latérale de la section de mur intérieur (5', 5'').

5. Étable préfabriquée selon la revendication 3 ou 4,
**caractérisée en ce que**
au moins une partie des éléments préfabriqués en béton (43) présente au moins une découpe de passage (5b.1) de largeur complète, en particulier sensiblement centrale.

6. Étable préfabriquée selon l'une des revendications précédentes,
**caractérisée en ce que**
au moins une partie des éléments préfabriqués en béton (1 ; 1' ; 39 ; 43) présente au moins un mur latéral (7 ; 7' ; 7.1, 7.2) reliant la section de mur extérieur et la section de mur intérieur, dont l'arête supérieure (7a) rectiligne présente une pente, en particulier comprise dans la plage entre 2° et 10°, correspondant à la différence entre la hauteur intérieure et extérieure (h5, h3).

7. Étable préfabriquée selon la revendication 6,
**caractérisée en ce que**
un élément de panne (25) saillant essentiellement perpendiculairement à partir du plan du mur latéral est prévu dans le secteur de l'arête supérieure du mur latéral (7').

8. Étable préfabriquée selon la revendication 6 ou 7,
**caractérisée en ce que**
dans le secteur de l'arête inférieure du mur latéral (7') et/ou du côté extérieur du mur intérieur (5) est prévu un support de caillebotis ou de sol (7b ; 5a), dont l'arête supérieure a la même hauteur que la ou les parois de caniveau à lisier (21) et est réalisée en particulier d'un seul tenant avec le mur latéral ou le mur intérieur.

9. Étable préfabriquée selon l'une des revendications 1 ou 3 à 8,
**caractérisée en ce que**
les parois de caniveau à lisier (21) sont assemblées, en particulier vissées, à la section de mur extérieur et intérieur (3 ; 5') en tant que pièces réalisées séparément.

10. Étable préfabriquée selon l'une des revendications précédentes,
**caractérisée en ce que**
au moins une partie des parois de caniveau à lisier (21) présente en direction de la dalle (9) un évidement (21a) pour créer une liaison fluidique entre des caniveaux à lisier (23) voisins.

11. Étable préfabriquée selon l'une des revendications précédentes,
**caractérisée par**
des caillebotis (11.1, 11.2) posés sur les parois de caniveaux à lisier (21) et des supports de caillebotis (7b ; 5a) prévus au choix.

12. Étable préfabriquée selon l'une des revendications 7 à 11,
**caractérisée en ce que**
les éléments de pannes (25) sont assemblés, en particulier vissés, au mur latéral (7) en tant que pièces réalisées séparément.

13. Étable préfabriquée selon l'une des revendications précédentes,
**caractérisée en ce que**
la section de mur extérieur (3) est réalisée en tant que mur à structure sandwich avec une couche isolante (3a) enrobée de béton, en particulier une couche isolante en Styropor.

14. Étable préfabriquée selon l'une des revendications précédentes,
**caractérisée en ce que**
des tubes ou canaux sont prévus dans les dalles, parallèlement aux sections de mur extérieur et intérieur, pour recevoir chacun une barre de support pour le levage ou la pose de l'élément préfabriqué en béton considéré.

15. Étable préfabriquée selon l'une des revendications précédentes,
**caractérisée par**
une toiture en éléments en tôle à ondes trapézoïdales (17) à structure sandwich, qui en particulier sont posés directement sur les murs périphériques et des éléments de pannes (25) prévus au choix.

16. Étable préfabriquée selon l'une des revendications précédentes,
**caractérisée par**
des semelles de fondation (15) en tant que support pour les éléments préfabriqués en béton, s'étendant parallèlement à la section de mur extérieur et de mur intérieur des éléments préfabriqués en béton.

17. Étable préfabriquée selon la revendication 16, **caractérisée en ce que**
au moins trois, de préférence quatre semelles de fondation (15) sont prévues pour chaque élément préfabriqué en béton (1 ; 43).

18. Étable préfabriquée selon l'une des revendications précédentes,
**caractérisée en ce que**
les éléments préfabriqués en béton (1 ; 1' ; 39, 39', 39'' ; 43) présentent une longueur dans la plage comprise entre 5 et 12 m et une largeur dans la plage comprise entre 2,5 et 4 m.

19. Étable préfabriquée selon l'une des revendications précédentes,
**caractérisée en ce que**
les murs intérieurs et latéraux (5 ; 5' ; 5'' ; 7 ; 7' ; 7.1, 7.2) présentent une épaisseur dans la plage comprise entre 80 et 140 mm, le mur extérieur (3, 3") une épaisseur dans la plage comprise entre 180 et 360 mm et la dalle (9) une épaisseur comprise entre 100 et 160 mm.

20. Étable préfabriquée selon l'une des revendications précédentes,
**caractérisée par**
deux rangées d'éléments préfabriqués en béton (1 ; 1' ; 39, 39', 39" ; 43) disposées en regard l'une de l'autre, avec une zone d'écartement de passage (13 ; 13'), des caillebotis (11.2) étant prévus dans la zone d'écartement de passage, lesquels sont en particulier posés sur des supports de caillebotis (5a) sur les murs intérieurs (5) situés en regard l'un de l'autre des éléments préfabriqués en béton.

21. Étable préfabriquée selon la revendication 20, **caractérisée en ce que**
dans la zone d'écartement de passage est prévue une toiture transparente (19), en particulier en plaques de PVC transparentes.

22. Étable préfabriquée selon l'une des revendications précédentes,
**caractérisée par**
la réalisation en éléments préfabriqués en béton (1 ; 43) symétriques l'un de l'autre, qui présentent chacun un mur latéral et une découpe de passage de demi-largeur et sont alignés alternativement avec les découpes de passage (5b ; 5b.2) orientées l'une vers l'autre ou les murs latéraux (7) orientés l'un vers l'autre.

23. Étable préfabriquée selon l'une des revendications précédentes,
**caractérisée par**
la réalisation avec des éléments préfabriqués en béton (39, 39', 39") différents, qui présentent une découpe de passage (5b) ou un mur latéral (7), un élément préfabriqué en béton (39') avec découpe de passage centrale de largeur complète ou deux éléments préfabriqués en béton (39") avec découpes de passage de demi-largeur disposées dans la zone d'arête latérale étant disposés à chaque fois entre deux éléments préfabriqués en béton avec mur latéral (39).

24. Étable préfabriquée selon l'une des revendications précédentes,
**caractérisée par**
une réalisation à deux étages en éléments préfabriqués en béton (45) constitutifs de modules superposés les uns aux autres, la rangée inférieure ou les rangées inférieures d'éléments préfabriqués en béton (45) présentant une hauteur intérieure coïncidant avec la hauteur extérieure.

25. Étable préfabriquée selon l'une des revendications précédentes,
**caractérisée en ce que**
au-dessus de la dalle (9) et de la paroi de caniveau à lisier (21) est prévue au moins par sections un sol plein, en particulier en béton, fonte ou matière plastique.

26. Étable préfabriquée selon l'une des revendications 1 à 6, 8 à 11 ou 13 à 25,
**caractérisée par**
un élément de structure de toit (47) assemblé de manière repliable à une section de mur extérieur ou à un mur latéral de l'élément préfabriqué en béton (45), la hauteur extérieure de l'élément préfabriqué en béton (45) coïncidant avec la hauteur intérieure.

27. Étable préfabriquée selon la revendication 26,
**caractérisée en ce que**
l'élément de structure de toit (47) présente deux pignons triangulaires, avec une section de couverture de toit s'étendant entre ceux-ci.
